# EUROPÄISCHE PATENTSCHRIFT

(11) **EP 1 103 491 B1**
(45) Veröffentlichungstag und Bekanntmachung des Hinweises auf die Patenterteilung: **17.03.2004**
(21) Anmeldenummer: 00117881.3
(22) Anmeldetag: 19.08.2000
(51) Int. Cl.: B65D 90/34, B65D 90/30, F16K 17/192, B67D 5/58

(54) **Verfahren und Vorrichtung zur Beatmung von Tankanlagen**
Method and device for the ventilation of tank systems
Procédé et dispositif pour la ventilation de systèmes de réservoirs

(30) Priorität: 25.10.1999 DE 19951270
(43) Veröffentlichungstag der Anmeldung: 30.05.2001
(73) Patentinhaber: Uhde GmbH, 44141 Dortmund (DE)
(72) Erfinder: Maurer, Rainer, 58332 Schwelm (DE)
(74) Vertreter: Patentanwälte Meinke, Dabringhaus und Partner

(56) Entgegenhaltungen:
- US-A- 1 754 091
- US-A- 1 874 742
- US-A- 4 116 357

## Beschreibung

Die Erfindung bezieht sich auf ein Verfahren und eine Vorrichtung zur Beatmung von Tankanlagen, die nicht brennbare Flüssigkeiten enthalten, vorrangig flüssige Säuren.

Tankanlagen im Sinne dieser Erfindung sind mit dem Erdreich fest verbundene Einzeltanks, von denen auch mehrere zumindest gasseitig miteinander verbunden sein können und eine gemeinsame Anlage bilden und deren Betriebsdruck nur geringfügig vom Atmosphärendruck abweicht. Der Begriff "Tankanlagen" umfaßt auch die mit ihnen verbundenen Ausrüstungen, die für den Tankbetrieb erforderlich sind, wie etwa Sicherheitseinrichtungen und Pumpen.

Flüssige Säuren im Sinne dieser Erfindung sind vorzugsweise die nicht brennbaren anorganischen Säuren, wie z.B. Salpetersäure, Schwefelsäure und Salzsäure, insbesondere vorliegend als konzentrierte, sogenannte rauchende Säuren, in denen Gase, wie Stickoxide, Schwefeloxide, Chlorwasserstoff oder Chlor, gelöst sind, welche gesundheitsschädlich sind und nicht in die Atmosphäre gelangen dürfen.

Die Erfindung ist aber auch für andere, nicht brennbare Säuren und sonstige Flüssigkeiten ohne gelöste Feststoffe geeignet, deren Ausdünstungen unerwünscht sind, wie z.B. Essigsäure u. dgl. Beim Befüllen eines Tanks verdrängt die in das Tankinnere einströmende Flüssigkeit die im leeren oder teilgefüllten Tank im Tankinneren befindliche Luft. In die beispielsweise mit einer Säure im Tankinneren in Kontakt stehende Luft dringen aus der Flüssigkeitsoberfläche heraus sowohl die säurebildenden Gase als auch der Wasserdampf der Säure als auch eventuell andere gelöste Gase. Die Luft über der Flüssigkeitsoberfläche wird mit den Gasen und dem Wasserdampf bis an die jeweilige Sättigungsgrenze und darüber hinaus beladen, je nachdem, wie sich das thermodynamische Gleichgewicht zwischen säurefeuchter Luft und flüssiger Säure einstellt.

So kann beispielsweise eine Säure, deren Temperatur beim Befüllen des Tankes höher als die Lufttemperatur im Tankinneren ist, ihre Sättigungsgrenze in der Luft überschreiten und es bilden sich in der Tankluft die Säurenebel. Diese bleiben als feine Aerosole durchaus luftseitig in der Schwebe. Daher werden sie beim Befüllvorgang auf dem Weg des Entweichens der flüssigkeitsverdrängten Luft durch die Tankbelüftungsstutzen hindurch sowohl als Säuredämpfe als auch als Säurenebel in die Umgebung abgeleitet.

Daher besteht bei Tankanlagen für Säuren bei der Tankbeatmung besonders während Befüllvorgängen die Gefahr von Gas- und Säurenebelemissionen. Um diese heute meist unzulässigen Emissionen zu verhindern, sind nach dem Stand der Technik aufwendige Absaugsysteme und externe Waschsysteme für die Abreinigung der säurebeladenen, beim Befüllvorgang aus dem Tank entweichenden Luft erforderlich. Daher ist bei der Tankauslegung mit höheren Über- bzw. Unterdrücken zu rechnen, um die genannten externen Systeme bei bestimmungsgemäßem Betrieb funktionsfähig zu halten und die Sicherheit der Tankanlagen auch beim Auftreten von Fehlfunktionen der externen Systeme jederzeit zu gewährleisten.

Beispielsweise aus der US-4 116 357 ist der kappenförmige Abschlußdeckel eines Tanks bekannt, bei der der in Richtung auf den Tank weisende, die obere Austrittsöffnung mit Abstand umgebende Rand des Deckels in eine wassergefüllte Rinne taucht, um zum einen die Dichtigkeit zu gewährleisten und zum anderen das Unterspülen von Gasblasen durch das Wasser möglich zu machen. Ein derartiges Dichtungssystem zeigen auch die US-1 754 091 und US-1 874 742.

In vielen Fällen sind weiterhin Sicherheitsventile und/oder Berstscheiben vorzusehen, um Tanks gegen das Auftreten von unzulässig hohem Über- oder Unterdruck abzusichern. Die Auslässe dieser Sicherheitseinrichtungen müssen bei Anwesenheit gefährlicher Stoffe, wie den genannten Säuren sowie ihren Ausdünstungen, ebenfalls in aufwendiger Weise mit Abscheidevorrichtungen ausgestattet werden.

Aufgabe der Erfindung ist die Schaffung einer Lösung, mit der der oben beschriebene Aufwand im wesentlichen verhindert wird und mit der gleichzeitig erreicht wird, daß nur Gasvolumina in die Umwelt z.B. beim Befüllen eines Tankes bzw. einer Tankanlage abgegeben werden, die unschädlich bzw. umweltneutral sind, wobei gleichzeitig eine Vorrichtung vorgeschlagen wird, mit der dieses Ziel erreicht wird.

Mit einem Verfahren der eingangs bezeichneten Art wird diese Aufgabe gemäß der Erfindung dadurch gelöst, daß zum Druckausgleich gegenüber der Atmosphäre im Bereich des Tankdeckels bei Auftreten von Überdruck im Tankinneren das über dem Flüssigkeitsspiegel stehende Gas zunächst durch eine mit der Tankflüssigkeit gefüllte Sperrkammer und anschließend durch eine weitere, mit einer anderen Flüssigkeit, insbesondere Wasser, gefüllte Sperrkammer und bei umgekehrten Druckverhältnissen in umgekehrter Richtung Gas aus der Atmosphäre über die beiden Sperrkammern in das Tankinnere geführt wird, wobei die mit Tankflüssigkeit gefüllte Sperrkammer im Überlaufprinzip permanent mit Tankflüssigkeit durchflutet wird.

Bei der neuen, erfindungsgemäßen Tankbeatmung wird die Beatmungsöffnung des Tankes durch zwei beatmungsluftseitig hintereinander geschaltete Flüssigkeitssperren verschlossen. Jede Flüssigkeitssperre besitzt eine äußere und eine innere, jeweils oben offene, unten mit einem Boden versehene Sperrkammer. Innere und äußere Sperrkammer sind an ihren bodenseitigen Enden durch einen sperrflüssigkeitsführenden Kontrollraum verbunden und kommunizieren durch den Kontrollraum hindurch mit der Sperrflüssigkeit derart, daß sich ihre Spiegel in beiden Sperrkammern auf dem gleichen Niveau einstellen. Beatmungsluft kann die Flüssigkeitssperre passieren, indem sie beispielsweise als Abluft aus dem befüllten Tankinhalt verdrängt in die innere Sperrkammer oben eintritt und den Sperrflüssigkeitsspiegel mit ihrem Verdrängungsvolumen beaufschlagt.

Die Sperrflüssigkeit der inneren Sperrkammer wird soweit verdrängt, bis sie im Kontrollraum einen Freispiegel bildet und damit der Abluft einen sperrflüssigkeitsfreien Querschnitt eröffnet, durch den sie den Kontrollraum passieren kann, um dann in die mit verdrängter Sperrflüssigkeit beaufschlagte andere Sperrkammer einzutreten. Die Abluft durchsetzt darin die Sperrflüssigkeit gegen die Schwerkraftrichtung nach oben und verläßt am oberen Sperrflüssigkeitsspiegel die andere Sperrkammer.

Die Flüssigkeitssperren sind als Waschsystem ausgeführt und so bemessen, daß nur geringfügige, beatmungsluftseitige Über- bzw. Unterdrücke ± 5-10 mbar erforderlich sind zur Herbeiführung der Spiegelniveauspiele beim jeweiligen kommunizierenden Verdrängen der Sperrflüssigkeit von einer Sperrkammer in die jeweils andere. Der Tank muß daher berechnungsmäßig (etwa im Sinne der Druckbehälterverordnung) nicht als Druckbehälter betrachtet werden. Auch eine Nachrüstung bestehender, nicht als Druckbehälter geführter Tankanlagen ist mit diesem System ohne weiteres möglich.

Weitere Ausgestaltungen der Erfindung ergeben sich aus den Unteransprüchen sowohl was die Verfahrensweise betrifft als auch die Vorrichtung zur Durchführung des Verfahrens.

Mit einer Einrichtung bzw. Vorrichtung zur Durchführung des Verfahrens wird die weiter oben angegebene Aufgabe durch die Merkmale des Anspruches 5 gelöst.

Mit dieser Gestaltung der Vorrichtung bzw. Gestaltung des Abschlußdeckels werden zwei Sperrflüssigkeitssysteme gebildet, wobei ein System, z.B. das innere, mit gekühlter Tankinhaltsäure gefüllt sein kann und das äußere System, wie oben schon angegeben, mit einer wässrigen Lösung, die wiederum gekühlt sein kann, wie dies die Erfindung auch vorsieht. Die Wirkungsweise ist dabei die folgende:

Aus dem Tank austretendes Gas perlt vor dem Austritt in die Atmosphäre nacheinander durch die beiden Flüssigkeiten, zuerst durch die gekühlte Säure, wo der größte Teil der schädlichen Abgasbestandteile absorbiert wird, und danach durch die gekühlte wässrige Lösung, in der die restlichen schädlichen Abgasbestandteile bis auf ein tolerierbares Maß absorbiert werden. Beide Flüssigkeitssysteme werden ständig umgepumpt und besitzen auf dem Tankdach je einen Einlaß und einen Auslaß.

Im ersten Sperrsystem, das mit gekühlter Säure betrieben wird, wird das Lösevermögen für die Schadgase gegenüber der in der Tankanlage gelagerten Säure durch externe Kühlung vergrößert. Die Säure wird dabei aus dem Tanksumpf abgezogen und entweder mittels einer Zirkulationspumpe oder von der Tankpumpe über die abgezweigte Mindestmengenleitung in dosierter Menge dem ersten Sperrsystem zugeführt. Die Kühlung erfolgt zweckmäßigerweise in einem Wärmeaustauscher üblicher Bauart, vorzugsweise in einem Doppelrohr. Hierbei wird das mit fallender Temperatur ansteigende physikalische Lösungsvermögen jener Säuren für Gase zur Absorption genutzt. Die Menge an gekühlter Säure, die dem Flüssigkeitsverschluß zuzuführen bzw. durch ihn durchzuschleusen ist, als auch die einzustellende Temperatur, auf die die Säure zu kühlen ist, bemißt sich anhand der Füllraten des Tankvolumens, der Temperatur des Tankinhaltes bzw. der Temperaturänderung des Tankinhaltes während des Befüllvorganges und der dadurch hervorgerufenen, entgasenden Mengen sowie deren Gehalt an schädlichen Gaskomponenten.

Das Gesamtlösungsvermögen des ersten Sperrsystemes ist so ausgelegt, daß das Produkt aus dem durch die externe Kühlung gewonnenen Lösungsvermögen und dem Mengendurchsatz der Säure dem Schadgaseintrag durch einperlendes Schadgas genau entspricht oder ihn übertrifft. Der Rücklauf der Säure aus dem Ablauf des im Tankdeckel integrierten ersten Sperrsystemes erfolgt über eine weitere integrierte Sperrkammer für den Tanküberlauf. Von dort läuft die um die aus der Abluft rückgewonnene Säuremenge verstärkte Säure zurück in den Lagertank.

Das zweite Sperrsystem, das mit wässriger Lösung betrieben wird, dient zum einen als Sicherheitsabscheider, zum anderen werden Schadstoffe, die als Überriß aus dem ersten Sperrsystem ausgetragen werden, aufgefangen sowie Ausdünstungen absorbiert, die die gekühlte Säure des ersten Sperrsystemes entsprechend ihrem Partialdruck abgibt. Im einfachsten Fall kommt als wässrige Lösung Prozeßwasser in Frage, welches danach mit geringen Verunreinigungen in eine biologische Reinigungsstufe gegeben wird.

Um die Löslichkeit zu erhöhen, aber auch um den Wasserdampfpartialdruck zu erniedrigen und so die Diffusion von Wasserdampf des zweiten Sperrsystemes in die hygroskopisch wirkende Säure des ersten Sperrsystemes mit der Folge von Verdünnung und Erwärmung der Säure durch Lösungswärme zu verringern, kann dieses Wasser vor seiner Aufgabe auch gekühlt werden. Je nach den herrschenden klimatischen Bedingungen und den Ansprüchen bezüglich der Verhinderung von Säureverdünnung, kann dem Wasser auch ein Frostschutzmittel zugesetzt werden und eine Kühlung auf unter 0°C erfolgen.

Um die Reinigungswirkung des Sperrkammersystemes gegenüber Abgasen stets zu gewährleisten, müssen die Sperrkammern kontinuierlich mit frischer Flüssigkeit beschickt werden. Eine Ausgestaltung der Erfindung sieht daher vor, daß mittels Verriegelungen verhindert wird, daß Befüllvorgänge stattfinden können, wenn der kontinuierliche Nachfluß von Sperrflüssigkeit aus irgendeinem Grund unterbrochen ist.

Da die Tankanlage sowohl gegen Überdruck als auch gegen Unterdruck gesichert sein muß, d.h. Beschickung und Entleerung des Tankes innerhalb der vorgegebenen Druckbereiche zu gewährleisten ist, sind die Abläufe der jeweiligen Sperrsysteme nach dem Prinzip der kommunizierenden Röhren gestaltet.

Die Erfindung ist nachstehend anhand der Zeichnung beispielsweise näher erläutert. Diese zeigt in
- Fig. 1: einen Halbschnitt durch eine Deckelkonstruktion bei Atmosphärendruck sowohl innerhalb als auch außerhalb des Tankes,
- Fig. 2: einen Halbschnitt durch eine Deckelkonstruktion mit leicht angestiegenem Innendruck des Tankes während eines Befüllvorganges gegenüber dem außen anliegenden Atmosphärendruck,
- Fig. 3: einen Halbschnitt durch eine Deckelkonstruktion mit leicht abgesunkenem Innendruck des Tankes während eines Entnahmevorganges gegenüber dem Atmosphärendruck,
- Fig. 4: die geometrischen Zuordnungen der Ab- und Überläufe in vereinfachter Darstellung sowie in
- Fig. 5: die Möglichkeit eines Abschlusses gegen Atmosphäre seitens des Tanküberlaufes.

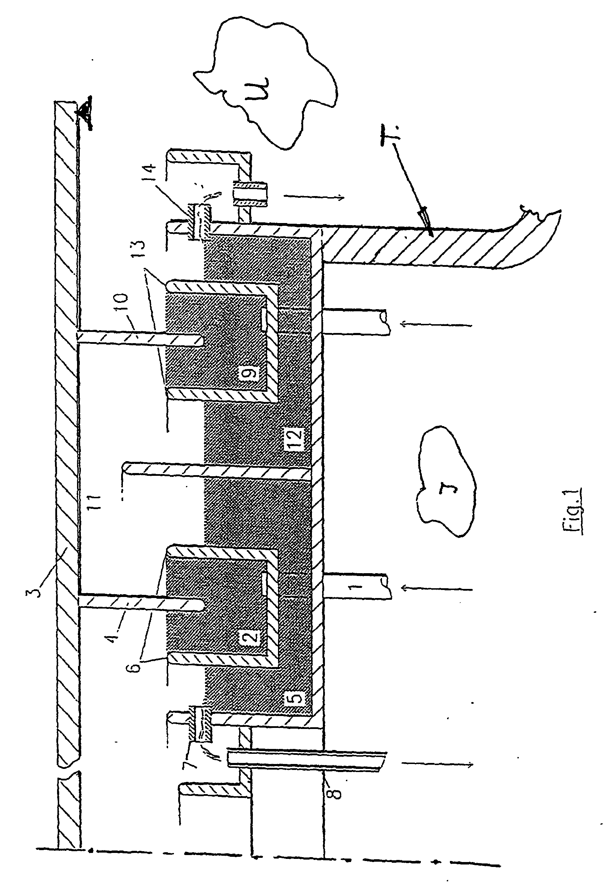

Von dem in Fig. 1 mit "T" bezeichneten Tank ist nur der obere Randbereich vereinfacht wiedergegeben, der mit einem Rinnensystem 2, 5, 9, 12 ausgerüstet ist, das mit einem mit 3 bezeichneten Tankdeckel korrespondiert, der mit zwei Sperrflächen 4 bzw. 10 in die jeweils im wesentlichen mittig zu den Rinnen 5 und 12 angeordneten Rinnen 2 bzw. 9 eintaucht, wobei die Rinnensysteme mit Sperrflüssigkeit gefüllt sind. Das Tankinnere ist in Fig. 1 mit "I", die Umgebung des Tankes mit "U" bezeichnet.

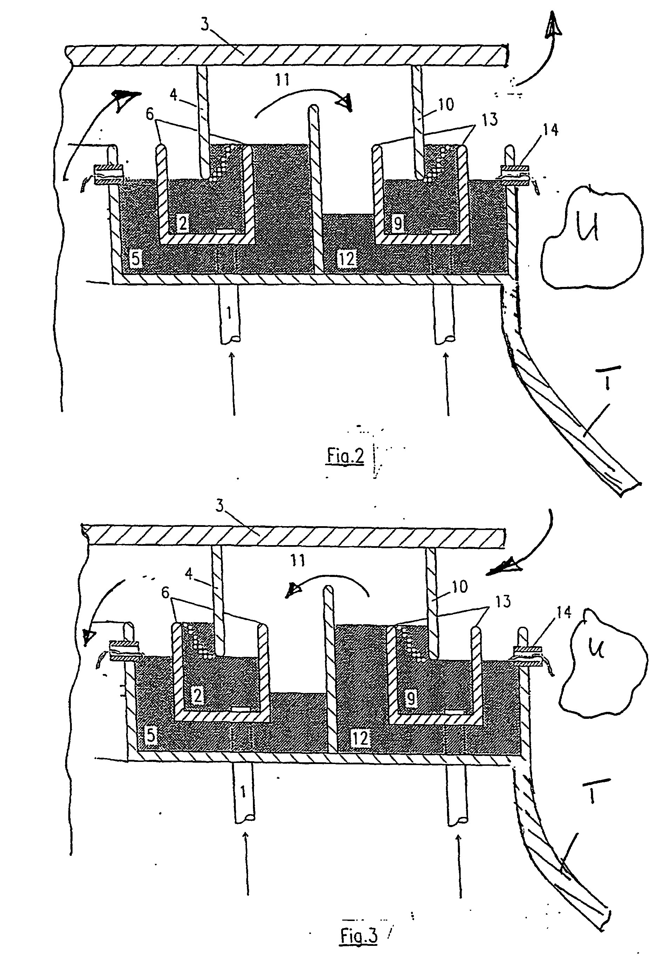

In den Figuren sind die Rinnensysteme vereinfacht insofern wiedergegeben, als es sich beispielsweise um konzentrisch angeordnete kreisförmige Rinnen handeln kann, die zeichnerisch sich ergebenden Lichtkanten sind in den Figuren weggelassen. Die unterschiedlichen Druckverhältnisse und damit sich ausbildende Flüssigkeitsspiegel ergeben sich aus den Fig. 1 bis 3, wobei Fig. 1 den Zustand zeigt, bei dem im Inneren des Tankes 10 der gleiche Druck herrscht, wie in der mit U bezeichneten Umgebung. In Fig. 2 herrscht im Tankinneren gegenüber der Umgebung Überdruck, in Fig. 3 Unterdruch.

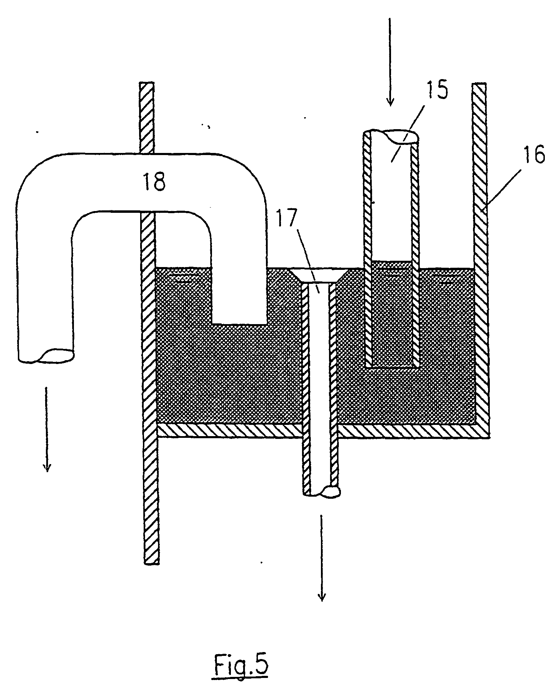

In Fig. 1 fließt die bei 1 zugeführte Sperrsäure senkrecht zur Schnittebene in der ringförmig angeordneten inneren Sperrkammer 2. Das am Tankdeckel 3 befestigte, ringförmige innere Sperrblech 4 teilt die Flüssigkeitsoberfläche in zwei Abschnitte und bewirkt eine gasseitige Trennung. Die innere Sperrkammer 2 ist eingebettet in das innere Überlaufsystem 5 für Sperrsäure. Dieses innere Überlaufsystem 5 ist als Syphon ausgeführt. Die ablaufende Sperrsäure läuft beim Sperrsäureüberlauf 6 in das innere Überlaufsystem 5, welches bei 7 einen freien Sperrsäureablauf besitzt. Von dort aus fließt die Sperrsäure in freiem Gefälle durch das Fallrohr 8 in den Tanküberlauf (dargestellt in Fig. 5 Nummer 15, nicht dargestellt in Fig. 1, Fig. 2 und Fig. 3).

In gleicher Weise ist die äußere Sperrkammer 9 aufgebaut, in der die wässrige Sperrflüssigkeit senkrecht zur Schnittebene fließt. Gasseitig ist die äußere Sperrkammer 9 durch das ringfömige, am Deckel 3 befestigte äußere Sperrblech 10 getrennt, jedoch bildet sie gemeinsam mit der inneren Sperrkammer 2 den Gasraum 11. Die äußere Sperrkammer 9 ist eingebettet in das äußere Überlaufsystem 12, welches wie das innere Überlaufsystem 5 als Syphon ausgeführt ist. Die aus der äußeren Sperrkammer 9 abfließende wässrige Sperrflüssigkeit fließt beim Sperrflüssigkeitsablauf 13 in das äußere Überlaufsystem 12, welches bei 14 einen freien Sperrflüssigkeitsablauf besitzt. Von dort aus fließt die wässrige Sperrflüssigkeit in freiem Gefälle ab.

In Fig. 2 wird der Fall dargestellt, daß aufgrund eines Befüllvorganges oder aufgrund von Erwärmung oder aufgrund von Ausgasung der gelagerten Flüssigkeit der Druck innerhalb des Tankes leicht gegenüber dem außen anliegenden Atmosphärendruck ansteigt. Die Druckdifferenz bewirkt, daß der Flüssigkeitsspiegel auf der dem Überdruck zugewandten Seite der inneren Sperrkammer 2 absinkt, bis die Unterkante des inneren Sperrbleches 4 erreicht ist.

Der Flüssigkeitsspiegel auf der dem Überdruck abgewandten Seite der Sperrkammer 2 bleibt dabei unverändert, da die verdrängte Flüssigkeit in das innere Überlaufsystem 5 abfließt. Sobald der Flüssigkeitsspiegel der dem Überdruck zugewandten Seite die Unterkante des inneren Sperrbleches 4 leicht unterschreitet, kann Gas aus dem Tankinneren in den Gasraum 11 strömen, wobei es die Sperrsäure unterhalb des Gasraumes 11 passieren muß.

Bei dieser Passage, in der Skizze durch Blasen dargestellt, findet die Waschwirkung statt. Außerdem wird der Gasraum 11 druckseitig mit dem Tankinnenraum verbunden, was ein Absinken des Flüssigkeitsspiegels in der druckzugewandten Seite der äußeren Sperrkammer 9 zur Folge hat bis zum Erreichen der Unterkante des äußeren Sperrbleches 10. Der Flüssigkeitsspiegel auf der dem Überdruck abgewandten Seite der Sperrkammer 9 bleibt dabei unverändert, da die verdrängte Flüssigkeit in das Überlaufsystem 12 abfließt.

Sobald der Flüssigkeitsspiegel der dem Überdruck zugewandten Seite die Unterkante des äußeren Sperrbleches 10 leicht unterschreitet, kann Gas aus dem Gasraum 11 in die Atmosphäre strömen, wobei es die Sperrflüssigkeit in der äußeren Sperrkammer 9 passieren muß. Bei dieser Passage, in der Skizze ebenfalls durch Blasen dargestellt, findet die Auswaschung des Überrisses während der vorangegangenen Passage durch die Sperrsäure der inneren Sperrkammer 2 sowie die Auswaschung der Ausdünstungen der Sperrsäure im Gasraum 11 statt.

In Fig. 3 wird der Fall dargestellt, daß aufgrund eines Entnahmevorganges oder aufgrund von Abkühlung der gelagerten Flüssigkeit oder aufgrund von Absorption durch die gelagerte Flüssigkeit der Druck innerhalb des Tankes leicht gegenüber dem außen anliegenden Atmosphärendruck absinkt. Die Druckdifferenz bewirkt, daß der Flüssigkeitsspiegel auf der der Atmosphäre zugewandten Seite der äußeren Sperrkammer 9 absinkt bis die Unterkante des äußeren Sperrbleches 10 erreicht ist. Der Flüssigkeitsspiegel auf der dem Gasraum 11 zugewandten Seite der äußeren Sperrkammer 9 bleibt dabei unverändert, da die verdrängte Flüssigkeit in das äußere Überlaufsystem 12 abfließt.

Sobald der Flüssigkeitsspiegel der der Atmosphäre zugewandten Seite die Unterkante des äußeren Sperrbleches 10 leicht unterschreitet, kann Luft in den Gasraum 11 strömen, wobei sie die Flüssigkeit unterhalb des Gasraumes 11 passieren muß. Dabei wird der Gasraum 11 druckseitig mit der Atmosphäre verbunden, was ein Absinken des Flüssigkeitsspiegels in der dem Gasraum 11 zugewandten Seite der inneren Sperrkammer 2 zur Folge hat bis zum Erreichen der Unterkante des inneren Sperrbleches 4.

Der Flüssigkeitsspiegel auf der dem unter Unterdruck stehenden Tank zugewandten Seite der inneren Sperrkammer 2 bleibt dabei unverändert, da die verdrängte Flüssigkeit in das innere Überlaufsystem 5 abfließt. Sobald der Flüssigkeitsspiegel der dem Gasraum 11 zugewandten Seite die Unterkante des inneren Sperrbleches 4 leicht unterschreitet, kann Gas aus dem Gasraum 11 in den Gasraum des Tankes strömen, wobei es die Sperrsäure in der inneren Sperrkammer 2 passiert.

Auf diese Weise kann die Sicherung gegen Überdruck und gegen Unterdruck durch Wahl eines geeigneten Höhenabstandes zwischen den Unterkanten der Sperrbleche 4 und 10 auf der einen Seite und den Überläufen in die syphonartigen Überlaufsysteme 5 und 12 auf der anderen Seite für den Normalbetrieb konstruktiv erfolgen, wobei noch die Dichte der zu lagernden Flüssigkeit zu berücksichtigen ist. Zu beachten ist ferner, daß die freien Abläufe 7 und 14 hinreichend tief angeordnet sind, so daß sich einerseits kein Stau im Syphon bildet, sich andererseits aber stets Flüssigkeit in den Überlaufsystemen 5 und 12 befindet und der Syphonverschluß erhalten bleibt.

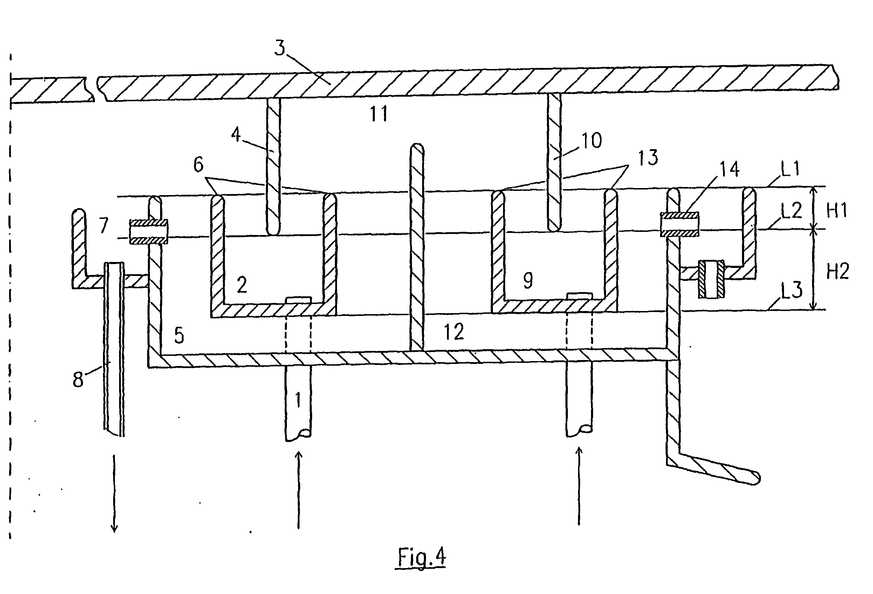

Diese Zusammenhänge werden in Fig. 4 verdeutlicht: Die Linie L1 kennzeichnet eine Ebene senkrecht zur Zeichenebene, die von den oberen Begrenzungen des Sperrsäureüberlaufes 6 und des Sperrflüssigkeitsüberlaufes 13 begrenzt wird. Die Linie L2 kennzeichnet eine Ebene senkrecht zur Zeichenebene, die von den oberen Begrenzungen der freien Abläufe 7 und 14 sowie von den unteren Begrenzungen der Trennbleche 4 und 10 des Tankdeckels 3 begrenzt wird. Die Linie L3 kennzeichnet eine gedachte Ebene senkrecht zur Zeichenebene, die durch die Funktionsweise der Überlaufsysteme 5 und 12 bestimmt wird, derart, daß ein Gasaustausch stattfinden könnte, wenn der Flüssigkeitsspiegel unterhalb dieser Ebene fiele.

Wenn der vertikale Abstand, der durch die Linien L1 und L2 als H1, und der vertikale Abstand, der durch die Linien L2 und L3 als H2, bezeichnet wird, gilt, daß H2 erfindungsgemäß mindestens so groß wie H1 gewählt werden muß.

Zusätzlich zu der eigentlichen Tankbeatmung ist auch der Tanküberlauf gegen die Atmosphäre abzuschließen, was in Fig. 5 dargestellt ist. Der Abschluß gegen die Atmosphäre erfolgt zweckmäßigerweise ebenfalls durch Sperrsäure, die vom Rücklauf des Waschsystems (Nummer 14 in Fig. 1), hier dargestellt durch den eingetauchten Zulauf 15 in die umlaufende Rinne 16, aufgegeben wird. Die übrige Ausführung des Sperrsystemes für den Überlauf kann in bewährter Weise nach dem Stand der Technik erfolgen mit einem in der umlaufenden Rinne 16 eingelassenen inneren Überlauf 17 und einem abgetauchten äußeren Überlaufrohr 18.

Der Abschlußdeckel (Fig. 1, Nummer 3) ist gewichtsmäßig so zu bemessen, daß er vergleichbar zu einem Sicherheitsventil bei eventuell anstehendem Überdruck voll öffnet. Je nach gewünschter Druckauslegung für den Tank und der Deckelgröße ergibt sich ein kritisches Deckelgewicht, das zum Anheben des lose aufliegenden Deckels und zur Druckentlastung führt. Geführt wird der Deckel dabei durch festverbundene Buchsen, die in mehreren fluchtenden Führungsstangen, die auf dem Tankdach senkrecht angeordnet sind, laufen und die sicherstellen, daß der Deckel nicht durch Wind und Sturm abgehoben oder zum Kippen gebracht werden kann. Die Führungsstangen und Buchsen gewährleisten auch, daß der Deckel nach einem Abheben aufgrund eines Druckanstieges in der Tankanlage, hervorgerufen durch nichtbestimmungsgemäßem Tankbetrieb, nach seinem Wiederaufsetzen wieder richtig aufliegt und die Kammern der Sperrsysteme voneinander trennt.

## Patentansprüche

1. Verfahren zur Beatmung von mit nicht brennbaren Flüssigkeiten gefüllten Tankanlagen,
**dadurch gekennzeichnet,**
**daß** zum Druckausgleich gegenüber der Atmosphäre im Bereich des Tankdeckels (3) bei Auftreten von Überdruck im Tankinneren (I) das über dem Flüssigkeitsspiegel stehende Gas zunächst durch eine mit der Tankflüssigkeit gefüllte Sperrkammer (2) und anschließend durch eine weitere, mit einer anderen Flüssigkeit, insbesondere Wasser, gefüllte Sperrkammer (9) und bei umgekehrten Druckverhältnissen in umgekehrter Richtung Gas aus der Atmosphäre über die beiden Sperrkammern (2, 9) in das Tankinnere (I) geführt wird, wobei die mit Tankflüssigkeit gefüllte Sperrkammer (2) im Überlaufprinzip permanent mit Tankflüssigkeit durchflutet wird.

2. Verfahren nach Anspruch 1,
**dadurch gekennzeichnet,**
**daß** die die Sperrkammer (2) durchfließende Tankflüssigkeit auf einer gegenüber dem Tankgasraum niedrigeren Temperatur gehalten wird.

3. Verfahren nach einem der vorangehenden Ansprüche,
**dadurch gekennzeichnet,**
**daß** das Gas durch einen beiden Sperrkammern (2,9) zugeordneten Gasraum (11) geleitet wird, wobei der Tankdeckel (3) mit in die Sperrkammer eintauchenden Sperrwänden (4,10) diesen gemeinsamen Gasraum (11) gegenüber dem Tankinneren (I) und der Umgebung (U) absperrt.

4. Verfahren nach einem der vorangehenden Ansprüche,
**dadurch gekennzeichnet,**
**daß** die äußere wässrige Sperrflüssigkeit gekühlt und/oder mit einem Frostschutzmittel versetzt wird.

5. Vorrichtung insbesondere zur Durchführung des Verfahrens nach einem der vorangehenden Ansprüche,
**dadurch gekennzeichnet,**
**daß** im oberen, dem Tankdeckel (3) zugeordneten Randbereich des Tanks (T) zwei mit Sperrflüssigkeiten gefüllte Rinnen (2,9) vorgesehen sind, in die Trennstege (4,10) am Tankdeckel (3) von oben eintauchen, die von Gasperlen unterspülbar sind, wobei zwischen den Rinnen (2,9) und den Trennstegen (4,10) ein gemeinsamer, vom Behälterinneren (I) einerseits und von der Umgebung (U) andererseits getrennter Gasraum (11) gebildet ist und jeder Rinne (2,9) ein Sperrflüssigkeitszulauf (1) und ein Sperrflüssigkeitsablauf (6, 13) zur Bildung einer permanenten Durchströmung zugeordnet sind.

6. Vorrichtung nach Anspruch 5,
**dadurch gekennzeichnet,**
**daß** jede Rinne (2,9) ihrerseits in einer weiteren, von der entsprechenden Flüssigkeit gefüllten, nach oben offenen Rinne (5,12) angeordnet ist, wobei der Überlauf (6,13) der jeweiligen Rinne (2,9) in die umgebende Rinne (5 bzw. 12) führt, die ihrerseits mit einem Überlauf (7,14) zur Rückführung der Flüssigkeit in ein Umpumpsystem versehen ist.

7. Vorrichtung nach Anspruch 5 oder einem der folgenden,
**dadurch gekennzeichnet,**
**daß** wenigstens im Umpumpkreislauf der mit Behälterflüssigkeit gefüllten inneren Rinnen (2,5) eine Kühleinrichtung, wie beispielsweise ein Röhrenwärmetauscher, angeordnet ist.

8. Vorrichtung nach Anspruch 5 oder einem der folgenden,
**dadurch gekennzeichnet,**
**daß** die Sperrinnen (2,5;9,12) kreisförmig, sich konzentrisch umgebend, am Behälterrand angeordnet sind.

9. Vorrichtung nach Anspruch 5 oder einem der folgenden,
**dadurch gekennzeichnet,**
**daß** dem in der Regel wässrigen Flüssigkeitsumlauf der äußeren Rinnen (9,12) ein Wärmetauscher zur Kühlung zugeordnet ist.

10. Vorrichtung nach Anspruch 5 oder einem der folgenden,
**dadurch gekennzeichnet,**
**daß** der Tankdeckel (3) mit den an seiner Unterseite befindlichen, in die Rinnen (2,9) eintauchenden Trennstegen (4, 10) in Gleitführungen geführt ist zur Ausübung gezielter Hub- und Senkbewegung bei plötzlichen Druckänderungen im Tank.

11. Vorrichtung nach Anspruch 5 oder einem der folgenden, **gekennzeichnet durch**
eine elektronische Schutzschaltung zur Verhinderung des Befüllens und/oder Entleerens des jeweiligen Tankes (T) bei Versagen der Sperrflüssigkeitsumwälzung.

## Claims

1. Process for ventilating tank installations filled with non-flammable liquids,
**characterised in that** to equalise the pressure relative to the atmosphere in the vicinity of the tank lid (3), when an excess pressure occurs in the tank's interior (I) the gas that is lying above the surface level of the liquid is initially conducted through a catchment chamber (2) filled with the tank liquid and thereafter through a further catchment chamber (9) filled with a different liquid, notably water, and when the reverse pressure conditions prevail gas is conducted in the opposite direction from the atmosphere into the tank's interior (I) via the two catchment chambers (2, 9), and using the overflow principle the catchment chamber (2) filled with tank liquid is permanently flooded with tank liquid.

2. Process according to claim 1,
**characterised in that** the tank liquid flowing through the catchment chamber (2) is maintained at a lower temperature relative to the tank's gas compartment.

3. Process according to either of the preceding claims,
**characterised in that** the gas is conducted through a gas compartment (11) associated with both catchment chambers (2, 9), the tank lid (3) shutting off this common gas compartment (11) from the tank's interior (I) and from the environment (U) by catchment walls (4, 10) which are immersed in the catchment chamber.

4. Process according to any of the preceding claims,
**characterised in that** the outer aqueous catchment fluid is cooled and/or an antifreeze is added to it.

5. System especially for implementing the process according to any of the preceding claims,
**characterised in that** provided in the tank's (T) upper peripheral region, which is associated with the tank lid (3), there are two channels (2, 9) filled with catchment liquids, and immersed from above into said channels are partitioning lands (4, 10) on the tank lid (3), which are adapted to be scoured by gas bubbles, there being formed between the channels (2, 9) and the partitioning lands (4, 10) a common gas compartment (11) which is divided from the tank's interior (I) on the one hand and from the environment (U) on the other, and there being associated with each channel (2, 9) a catchment liquid inlet (1) and a catchment liquid outlet (6, 13) for constituting a permanent throughflow.

6. System according to claim 5,
**characterised in that** each channel (2, 9) is in turn disposed in a further channel (5, 12) filled with the corresponding liquid and open at the top, with the overflow (6, 13) from the respective channel (2, 9) leading into the surrounding channel (5 or 12, respectively), which in turn is equipped with an overflow (7, 14) for returning the liquid to a circulating pump system.

7. System according to claim 5 or any of those following,
**characterised in that** at least in the circulating pump circuit of the inner channels (2, 5) filled with tank liquid there is arranged a cooling device, such as for example a shell-and-tube exchanger.

8. System according to claim 5 or any of those following,
**characterised in that** the channels (2, 5; 9, 12) are arranged in concentric circles at the rim of the tank.

9. System according to claim 5 or any of those following,
**characterised in that** a heat exchanger for cooling is associated with the normally aqueous liquid circuit of the outer channels (9, 12).

10. System according to claim 5 or any of those following,
**characterised in that** the tank lid (3), with the partitioning lands (4, 10) on its underside which are immersed in the channels (2, 9), runs in sliding guides so as to perform a carefully controlled lifting and lowering movement in the event of sudden pressure changes in the tank.

11. System according to claim 5 or any of those following,
**characterised by** an electronic protection circuit for preventing the filling and/or emptying of the respective tank (T) in the event of failure of the catchment liquid circulation system.

## Revendications

1. Procédé de ventilation de systèmes de réservoirs emplis de liquides incombustibles,
**caractérisé par le fait**
**que**, en vue d'équilibrer la pression vis-à-vis de l'atmosphère dans la région du couvercle (3) du réservoir, lors du développement d'une surpression dans l'espace interne (I) dudit réservoir, le gaz situé au-dessus du niveau du liquide est tout d'abord mené à travers une chambre d'isolement (2) emplie du liquide du réservoir, puis est mené à travers une autre chambre d'isolement (9) emplie d'un autre liquide, en particulier de l'eau ; et, lorsque règnent des conditions de pression inverses, du gaz provenant de l'atmosphère est introduit en sens inverse dans l'espace interne (I) du réservoir, par l'intermédiaire des deux chambres d'isolement (2, 9), sachant que la chambre d'isolement (2) emplie de liquide du réservoir est parcourue en permanence par du liquide du réservoir, selon le principe du trop-plein.

2. Procédé selon la revendication 1,
**caractérisé par le fait**
**que** le liquide du réservoir, parcourant la chambre d'isolement (2), est maintenu à une température inférieure vis-à-vis de la chambre à gaz du réservoir.

3. Procédé selon l'une des revendications précédentes,
**caractérisé par le fait**
**que** le gaz est conduit à travers une chambre à gaz (11) associée aux deux chambres d'isolement (2, 9), sachant que le couvercle (3) du réservoir isole cette chambre à gaz commune (11), vis-à-vis de l'espace interne (I) dudit réservoir et vis-à-vis de l'espace environnant (U), par des parois d'isolement (4, 10) qui pénètrent dans les chambres d'isolement.

4. Procédé selon l'une des revendications précédentes,
**caractérisé par le fait**
**que** le liquide extérieur d'isolement, de type aqueux, est refroidi et/ou combiné à un agent antigel.

5. Dispositif notamment conçu pour la mise en oeuvre du procédé selon l'une des revendications précédentes,
**caractérisé**
**par** la présence, dans la région marginale supérieure du réservoir (T), affectée au couvercle (3) dudit réservoir, de deux rigoles (2, 9) qui sont emplies de liquides d'isolement et dans lesquelles pénètrent, de haut en bas, des membrures séparatrices (4, 10) situées sur le couvercle (3) du réservoir et au-dessous desquelles des perles de gaz peuvent être mises en circulation, sachant qu'il est donné naissance, entre lesdites rigoles (2, 9) et lesdites membrures séparatrices (4, 10), à une chambre à gaz commune (11) séparée, d'une part, de l'espace interne (I) du réservoir et, d'autre part, de l'espace environnant (U) ; et sachant qu'une admission (1) de liquide d'isolement et une évacuation (6, 13) de liquide d'isolement sont associées à chaque rigole (2, 9), en vue d'engendrer une circulation traversante permanente.

6. Dispositif selon la revendication 5,
**caractérisé par le fait**
**que** chaque rigole (2, 9) est située, à son tour, dans une auge supplémentaire (5, 12) ouverte vers le haut et emplie par le liquide correspondant, le trop-plein (6, 13) de la rigole considérée (2, 9) débouchant dans l'auge environnante (5, respectivement 12) dotée, à son tour, d'un trop-plein (7, 14) en vue de renvoyer le liquide vers un système de mise en circulation par pompage.

7. Dispositif selon la revendication 5 ou l'une des suivantes,
**caractérisé par le fait**
**qu'**un système de refroidissement, comme par exemple un échangeur thermique à tubulures, est intégré au moins dans le circuit de pompage des rigoles intérieures (2, 5) emplies de liquide du réservoir.

8. Dispositif selon la revendication 5 ou l'une des suivantes,
**caractérisé par le fait**
**que** les rigoles d'isolement (2, 5 ; 9, 12) sont agencées circulairement sur le bord du récipient, en s'entourant concentriquement.

9. Dispositif selon la revendication 5 ou l'une des suivantes,
**caractérisé par le fait**
**qu'**un échangeur thermique destiné au refroidissement est affecté au circuit de liquide, en général aqueux, des auges extérieures (9, 12).

10. Dispositif selon la revendication 5 ou l'une des suivantes,
**caractérisé par le fait**
**que** le couvercle (3) du réservoir est guidé dans des guides coulissants, par les membrures séparatrices (4, 10) qui sont situées à sa face inférieure et pénètrent dans les rigoles (2, 9), en vue d'accomplir un mouvement approprié de levage et d'abaissement en cas de variations de pression brusques dans le réservoir.

11. Dispositif selon la revendication 5 ou l'une des suivantes,
**caractérisé par**
un circuit de protection électronique conçu pour empêcher l'emplissage et/ou le vidage du réservoir (T) considéré, en cas de défaillance de la mise en circulation du liquide d'isolement.
